# EUROPÄISCHE PATENTSCHRIFT

(11) **EP 4 182 581 B1**
(45) Veröffentlichungstag und Bekanntmachung des Hinweises auf die Patenterteilung: **30.04.2025**
(21) Anmeldenummer: 22709719.3
(22) Anmeldetag: 02.03.2022
(51) Int. Cl.: F16H 61/04, F16H 63/30, F16H 59/68

(54) **SCHALTUNGSEINRICHTUNG FÜR EIN GETRIEBE EINES KRAFTFAHRZEUGS**
SHIFTING DEVICE FOR A TRANSMISSION OF A MOTOR VEHICLE
DISPOSITIF DE CHANGEMENT DE VITESSE POUR UNE BOÎTE DE VITESSES D'UN VÉHICULE AUTOMOBILE

(30) Priorität: 17.03.2021 DE 102021001425
(43) Veröffentlichungstag der Anmeldung: 24.05.2023
(73) Patentinhaber: Mercedes-Benz Group AG, 70372 Stuttgart (DE)
(72) Erfinder: DOSTER, Thomas, 70188 Stuttgart (DE); SCHUSTER, Tobias, 73733 Esslingen (DE); HIRSEMANN, Nils, 76646 Bruchsal (DE); BELEWITSCH, Wadim, 73730 Esslingen am Neckar (DE); STEGMAIER, Thomas, 73527 Schwäbisch Gmünd (DE); BECKER, Lukas, 72581 Dettingen (DE); SCHARRER, Udo, 73734 Esslingen (DE)
(74) Vertreter: Novagraaf Group
(86) Internationale Anmeldenummer: PCT/EP2022/055245
(87) Internationale Veröffentlichungsnummer: WO 2022/194549

(56) Entgegenhaltungen:
- DE-A1- 102008 061 509
- DE-A1- 102011 051 859
- DE-A1- 102018 214 082
- DE-U1- 202011 050 731

## Beschreibung

Die Erfindung betrifft eine Schaltungseinrichtung für ein Getriebe eines Kraftfahrzeugs, insbesondere eines Kraftwagens, gemäß dem Oberbegriff von Patentanspruch 1.

Der DE 10 2018 214 082 A1 ist eine Klaue für eine Kupplungsanordnung als bekannt zu entnehmen, bei der die Klaue an ihrem Außenumfang eine Geberkontur aufweist, welche sich in Umfangsrichtung erstreckt. Eine Erstreckung der Geberkontur in radialer Richtung der Klaue ändert sich dabei in ihrem Drehzahlerfassungsbereich fortlaufend in Umfangsrichtung, so dass eine Außenkontur des Drehungserfassungsbereichs keinen Bereich mit konstantem Abstand zur Mittelachse aufweist.

In der DE 20 2011 050731 U ist eine Einrichtung zum synchronisierten Schalten einer formschlüssigen Kupplung beschrieben, welche Mittel zur Bestimmung des Verdrehwinkels zwischen dem ersten und dem Schaltelement der Kupplung aufweist.

Eine solche Schaltungseinrichtung für ein Getriebe eines Kraftfahrzeugs ist beispielsweise bereits der DE 10 2010 043 592 A1 als bekannt zu entnehmen. Die Schaltungseinrichtung weist wenigstens ein unsynchronisiertes Klauenschaltelement, das heißt ein unsynchronisiertes, formschlüssiges Schaltelement, auf, welches zwei um eine Drehachse relativ zueinander drehbare Schaltteile umfasst. Die Schaltteile weisen jeweils eine Schaltverzahnung auf. Die Schaltverzahnungen sind beispielsweise entlang der Drehachse einander zugewandt. Die Schaltteile sind entlang der Drehachse relativ zueinander zwischen wenigstens einer Koppelstellung und wenigstens einer Entkoppelstellung verschiebbar. In der Koppelstellung greifen die Schaltverzahnungen ineinander ein, sodass in der Koppelstellung die Schaltverzahnungen formschlüssig zusammenwirken. Hierdurch sind die Schaltteile drehfest miteinander verbunden. In der Entkoppelstellung sind die Schaltverzahnungen voneinander entkoppelt. Dies bedeutet, dass die Schaltverzahnungen in der Entkoppelstellung nicht ineinandergreifen und somit nicht zusammenwirken, sodass in der Entkoppelstellung die Schaltteile um die Drehachse relativ zueinander drehbar sind.

Aufgabe der vorliegenden Erfindung ist es, eine Schaltungseinrichtung der eingangs genannten Art derart weiterzuentwickeln sowie ein Verfahren zum Betreiben der Schaltungseinrichtung zu schaffen, sodass eine besonders vorteilhafte Schaltung realisiert werden kann.

Diese Aufgabe wird durch eine Schaltungseinrichtung mit den Merkmalen des Patentanspruchs 1 gelöst. Eine Weiterbildung der Erfindung ist in dem abhängigen Anspruch 2 angegeben.

Um eine Schaltungseinrichtung der im Oberbegriff des Patentanspruchs 1 angegebenen Art derart weiterzuentwickeln, dass eine besonders vorteilhafte Schaltung des einfach auch als Schaltelement bezeichneten Klauenschaltelements, insbesondere aus der Entkoppelstellung in die Koppelstellung, realisiert werden kann, ist gattungsgemäß eine insbesondere elektrische oder elektronische Erfassungseinrichtung vorgesehen, mittels welcher Drehstellungen, in welche zumindest eines der Schaltteile um die Drehachse relativ zu dem anderen Schaltteil, insbesondere in der Entkoppelstellung, drehbar ist, erfassbar sind. Mit anderen Worten, in der Entkoppelstellung kann das eine Schaltteil um die Drehachse relativ zu dem anderen Schaltteil gedreht und dadurch in die Drehstellungen bewegt werden, mithin die Drehstellungen relativ zu dem anderen Schaltteil einnehmen. Dabei ist es denkbar, dass das andere Schaltteil sowohl in der Entkoppelstellung als auch in der Koppelstellung, insbesondere permanent, drehfest an einem Gehäuse des Getriebes festgelegt ist, sodass das andere Schaltteil nicht relativ zu dem Gehäuse um die Drehachse drehbar ist. Dies bedeutet insbesondere, dass in der Koppelstellung das eine Schaltteil über das andere Schaltteil drehfest an dem Gehäuse festgelegt ist. In der Entkoppelstellung kann das eine Schaltteil um die Drehachse relativ zu dem anderen Schaltteil und relativ zu dem Gehäuse gedreht werden. Somit kann in der Entkoppelstellung das eine Schaltteil um die Drehachse relativ zu dem Gehäuse und relativ zu dem anderen Schaltteil gedreht und somit in die Drehstellungen bewegt werden. Insbesondere ist es durch das Erfassen der Drehstellungen möglich, die Drehstellungen des einen Schaltteils in Relation zu dem anderen Schaltteil und/oder dem Gehäuse zu ermitteln beziehungsweise zu setzen, sodass anhand der jeweiligen, erfassten Drehstellung eine jeweilige, auch als Relativlage oder Ausrichtung bezeichnete Lage des einen Schaltteils relativ zu dem anderen Schaltteil ermittelt beziehungsweise erfasst werden kann. Insbesondere kann die jeweilige Drehstellung als jeweilige Lage des einen Schaltteils relativ zu dem anderen Schaltteil ermittelt beziehungsweise erfasst werden, sodass beispielsweise durch Erfassen der jeweiligen Drehstellung die jeweilige Lage oder Ausrichtung des einen Schaltteils relativ zu dem anderen Schaltteil bekannt ist. Insbesondere ist die Erfassungseinrichtung dazu ausgebildet, eine Drehzahl des einen Schaltteils zu erfassen, welches sich mit der Drehzahl um die Drehachse relativ zu dem anderen Schaltteil dreht, insbesondere in der Entkoppelstellung. Somit ist es denkbar, dass die Erfassungseinrichtung ein Drehzahlerfassungssystem ist, mittels welchem die Drehzahl und somit die Drehstellungen des einen Schaltteils erfasst, das heißt gemessen werden können.

Des Weiteren ist es gattungsgemäß vorgesehen, dass die Schaltungseinrichtung eine auch als elektronische Steuereinrichtung bezeichnete, elektronische Recheneinrichtung aufweist, welche dazu ausgebildet ist, die Schaltteile in Abhängigkeit von den erfassten Drehstellungen aus der Entkoppelstellung in die Koppelstellung zu bewegen. Hierdurch kann das auch als formschlüssiges Schaltelement bezeichnete Klauenschaltelement geschaltet werden, ohne dass eine sogenannte Zahn-auf-Zahn-Stellung auftritt. Mit anderen Worten können die Schaltteile aus der Entkoppelstellung in die Koppelstellung bewegt werden, ohne dass eine sogenannte Zahn-auf-Zahn-Stellung auftritt. Der Erfindung liegen dabei insbesondere die folgenden Erkenntnisse zugrunde: Herkömmlicherweise werden Klauenschaltelemente durch eine insbesondere als Reibsynchronisierung ausgebildete Vorsynchronisierung synchronisiert, um eine Differenzdrehzahl zwischen den Schaltteilen der Klauenschaltelemente zu verringern beziehungsweise abzubauen, woraufhin die Schaltverzahnungen in Eingriff gebracht werden können. Dabei kann es zu erhöhtem Verschleiß und gegebenenfalls auch zu Ratschen, das heißt zu unerwünschten Geräuschen und somit zu Komforteinbußen kommen, insbesondere durch eine Zahn-auf-Zahn-Stellung.

Die Erfindung ermöglicht es nun einerseits, das unsynchronisierte Klauenschaltelement zu verwenden, das heißt zumindest auf eine reibschlüssige Synchronisierung des Klauenschaltelements zu verzichten. Andererseits ermöglicht es die Erfindung, Zahn-auf-Zahn-Stellungen insbesondere beim Bewegen der Schaltteile aus der Entkoppelstellung in die Koppelstellung zu vermeiden, da die auch als Drehwinkelpositionen bezeichneten Drehstellungen erfasst werden, und die Schaltteile in Abhängigkeit von den erfassten Drehwinkelpositionen aus der Entkoppelstellung in die Koppelstellung zu bewegen. Durch Berücksichtigen der Drehstellungen kann die elektronische Recheneinrichtung die Schaltteile derart beziehungsweise dann aus der Entkoppelstellung in die Koppelstellung bewegen, dass es nicht zu einer Zahn-auf-Zahn-Stellung und somit nicht zu einem erhöhten Verschleiß und nicht zu unerwünschten Geräuschen kommt. Das Bewegen der Schaltteile aus der Entkoppelstellung in die Koppelstellung wird auch als Einspuren der Schaltteile beziehungsweise des einfach auch als Klaue bezeichneten Klauenschaltelements bezeichnet. Insbesondere ist es möglich, in Abhängigkeit von den erfassten Drehstellungen (Drehwinkelpositionen) das Einspuren der Klaue gezielt zu regeln. Insbesondere in Verbindung mit einem hinreichend genauen Drehmomentbeziehungsweise Drehzahlgeber zum Erfassen der Drehstellungen wie beispielsweise einem Elektromotor und einer passenden Klauengeometrie wie beispielsweise eine Fang- und Sperrzahnausführung lässt sich gezielt ein Sperrzahn beziehungsweise ein erstes der Schaltteile und/oder das zweite Schaltteil ansteuern, um beim Einspuren der Klaue eine Zahn-auf-Zahn-Stellung und daraus resultierende, unerwünschte Phänomene wie Ratschen, Komforteinbußen oder unerwünschte Geräusche zu vermeiden.

Unsynchronisierte Klauenschaltelemente sind kosten- und bauraumgünstig sowie technologisch einfach, da eine insbesondere reibschlüssige Vorsynchronisierung entfallen kann. Insbesondere in einem Getriebe für einen elektrifizierten Antrieb mit einer Elektromaschine als Antriebsmaschine, wobei beispielsweise das erste Schaltteil oder das zweite Schaltteil, insbesondere das eine Schaltteil mit der Elektromaschine, insbesondere mit einem Rotor der Elektromaschine, insbesondere drehfest, verbunden ist, ist das auch als Einspurvorgang bezeichnete Einspuren der Klaue mittels der Elektromaschine regelbar. Im Vergleich zu einem Verbrennungsmotor lässt sich eine Elektromaschine gut und schnell regeln und auch gut und schnell auf eine Drehzahl von Null regeln, sodass eine Synchronisierung der Klaue entfallen kann. In der Folge kann das Einspuren mit einem hohen Schaltkomfort durchgeführt werden.

Vorzugsweise ist das Kraftfahrzeug, insbesondere rein, elektrisch antreibbar, sodass das Getriebe vorzugsweise eine Getriebe eines, insbesondere rein, elektrisch antreibbaren Fahrzeugs ist. Die Schaltteile werden beispielsweise auch als Schaltelementhälften bezeichnet. Die jeweilige Schaltverzahnung weist Zähne auf, welche auch als Klauenzähne bezeichnet werden. Dabei ist es denkbar, dass jeweilige Zahnenden der Klauenzähne des jeweiligen Schaltteils axial, das heißt entlang der Drehachse, zum jeweils anderen, gegenüberliegenden Schaltteil hin gerichtet sind, sodass vorzugsweise vorgesehen ist, dass die Schaltteile in axialer Richtung, das heißt entlang der Drehachse, nebeneinander beziehungsweise aufeinanderfolgend angeordnet sind. Somit ist vorzugsweise die Schaltverzahnung des einen Schaltteils dem anderen Schaltteil zugewandt, und die Schaltverzahnung des anderen Schaltteils ist axial dem einen Schaltteil zugewandt, insbesondere derart, dass die Schaltverzahnung des einen Schaltteils der Schaltverzahnung des anderen Schaltteils axial zugewandt ist, und die Schaltverzahnung des anderen Schaltteils der Schaltverzahnung des einen Schaltteils axial zugewandt ist. Jeweilige Längen der jeweiligen Klauenzähne der jeweiligen Schaltverzahnung erstrecken sich beispielsweise für jedes Schaltteil axial von einer bestimmten, gemeinsamen axialen Bezugsebene aus bis zu den jeweiligen Zahnenden, an denen die jeweiligen Zähne der jeweiligen Schaltverzahnung enden.

Befinden sich die Schaltteile in der Koppelstellung, so befindet sich das Klauenschaltelement in einem geschlossenen Zustand. Dabei ist es vorzugsweise vorgesehen, dass in dem geschlossenen Zustand des Klauenschaltelements die jeweiligen Zähne der jeweiligen Schaltverzahnung mit auch als Lücken oder Zahnlücken bezeichneten Klauenlücken der jeweils anderen Schaltverzahnung im Eingriff sind, wobei die jeweiligen Klauenlücken der jeweiligen Schaltverzahnung zwischen den jeweiligen Zähnen der jeweiligen Schaltverzahnung angeordnet sind, insbesondere in um die Drehachse verlaufender Umfangsrichtung des jeweiligen Schaltteils.

Des Weiteren ist es vorzugsweise vorgesehen, dass mindestens einer der Klauenzähne der jeweiligen Schaltverzahnung als ein Fangzahn ausgebildet ist, dessen insbesondere axiale und somit entlang der Drehachse verlaufende Länge größer als die Längen von anderen, als Sperrzähnen ausgebildeten Klauenzähnen der jeweiligen Schaltverzahnung ist.

Als weiterhin besonders vorteilhaft hat es sich gezeigt, wenn die Erfassungseinrichtung wenigstens ein Sensorelement und wenigstens ein mit dem einen Schaltteil drehfest verbundenes Geberelement umfasst. Vorzugsweise ist das Geberelement ein Geberrad. Das Sensorelement wird beispielsweise auch als Sensor bezeichnet. Beispielsweise ist das Sensorelement drehfest mit dem Gehäuse und/oder drehfest mit dem anderen Schaltteil verbunden. Dadurch, dass das Geberelement drehfest mit dem einen Schaltteil verbunden ist, ist das Geberelement mit dem einen Schaltteil um die Drehachse relativ zu dem Sensorelement und insbesondere relativ zu dem anderen Schaltteil beziehungsweise zu dem Gehäuse mitdrehbar. Das Geberelement weist Gebersegmente auf. Die Gebersegmente sind beispielsweise in um die Drehachse verlaufender Umfangsrichtung des Geberelements aufeinanderfolgend angeordnet und insbesondere so voneinander beabstandet, dass zwischen jeweils zwei benachbarten Gebersegmenten eine einfach auch als Lücke bezeichnete Geberlücke angeordnet ist. Die Gebersegmente sind mittels des Sensorelements (Sensor) erfassbar, sodass anhand des Erfassens der Gebersegmente die Drehstellungen des einen Schaltteils erfassbar sind. Mit anderen Worten ist beispielsweise die jeweilige Drehstellung durch wenigstens eines der Gebersegmente charakterisiert, sodass durch Erfassen der Gebersegmente, insbesondere wie bei einem Kurbelwellensensor, die Drehstellungen erfasst werden können. Das Sensorelement ist beispielsweise dazu ausgebildet, ein insbesondere elektrisches Signal bereitzustellen, welches die erfassten Gebersegmente und somit die Drehstellungen charakterisiert. Beispielsweise erzeugt das jeweilige Gebersegment einen jeweiligen Puls des Signals beziehungsweise des Sensors, sodass beispielsweise das Signal je Gebersegment einen Puls aufweist. Anhand der Pulse des Signals können die Gebersegmente und somit die Drehstellungen erfasst beziehungsweise ermittelt werden. Somit werden die Gebersegmente auch als pulsgebende Segmente oder pulsgebende Gebersegmente des Geberelements, insbesondere des Geberrads, bezeichnet.

Dabei ist es erfindungsgemäß vorgesehen, dass eine Anzahl der pulsgebenden Segmente des Geberelements mindestens der Summe aus einer Anzahl der Zähne der Schaltverzahnung des einen Schaltteils und einer Anzahl der Zahnlücken der Schaltverzahnung des einen Schaltteils entspricht.

Unter dem Merkmal, dass die elektronische Recheneinrichtung dazu ausgebildet ist, die Schaltteile in Abhängigkeit von den erfassten Drehstellungen aus der Entkoppelstellung in die Koppelstellung zu bewegen, ist insbesondere zu verstehen, dass die elektronische Recheneinrichtung dazu ausgebildet ist, eine Bewegung der Schaltteile aus der Entkoppelstellung in die Koppelstellung zu bewirken. Hierzu wird zumindest eines der Schaltteile beziehungsweise ein Aktor mittels der elektronischen Recheneinrichtung angesteuert. Ferner ist es vorzugsweise vorgesehen, dass die elektronische Recheneinrichtung dazu ausgebildet ist, die Schaltteile aus der Koppelstellung in die Entkoppelstellung zu bewegen, mithin ein Bewegen der Schaltteile aus der Koppelstellung in die Entkoppelstellung zu bewirken. Das Bewegen der Schaltteile aus der Entkoppelstellung in die Koppelstellung wird auch als Einlegen des Klauenschaltelements bezeichnet. Das Bewegen der Schaltteile aus der Koppelstellung in die Entkoppelstellung wird auch als Auslegen des Klauenschaltelements bezeichnet. Somit ist das Klauenschaltelement mittels der elektronischen Steuereinrichtung ein- und auslegbar.

Wie bereits zuvor angedeutet, ist es vorzugsweise vorgesehen, dass das erste Schaltteil und/oder das zweite Schaltteil, insbesondere bezogen auf die Schaltteile ausschließlich eines der Schaltteile, antriebsmäßig mit einem Abtrieb einer Elektromaschine beziehungsweise der zuvor genannten Elektromaschine verbunden ist. Hierunter kann insbesondere zu verstehen sein, dass das erste und/oder zweite Schaltteil, insbesondere das eine Schaltteil, drehfest mit dem Abtrieb, insbesondere mit einer Welle, der Elektromaschine verbunden ist.

Das Klauenschaltelement kann insbesondere dann mit einem hohen Schaltkomfort eingespurt werden, wenn eine Anzahl der Pulse, das heißt die Anzahl der Gebersegmente, mindestens so hoch ist wie die Anzahl der Zähne und Zahnlücken der Schaltverzahnung des einen Schaltteils zusammen. Dann liegt nämlich eine sogenannte, absolute Auflösung vor, sodass die Drehstellungen des einen Schaltteils besonders präzise erfasst werden können. Weist beispielsweise die Schaltverzahnung 60 Zähne und somit 60 Zahnlücken auf, so beträgt die Anzahl der Gebersegmente vorzugsweise 120, sodass auch die Anzahl der Pulse 120 beträgt.

In weiterer Ausgestaltung der Erfindung ist es vorgesehen, dass die Anzahl der Gebersegmente mindestens doppelt so groß ist wie die zuvor beschriebene Summe. Somit ist es vorzugsweise vorgesehen, dass die Anzahl der Gebersegmente mindestens viermal so groß ist wie die Anzahl der Zähne der Schaltverzahnung des einen Schaltteils.

Gemäß der vorliegenden Erfindung ist es vorgesehen, dass das Geberelement eine auch als Fehllücke bezeichnete Fehlstelle aufweist, an welcher eine in um die Drehachse verlaufender Umfangsrichtung des Geberelements verlaufende erste Breite einer ersten Lücke zwischen zwei benachbarten Gebersegmenten des Geberelements größer ist als in Umfangsrichtung des Geberelements verlaufende zweite Breiten von zweiten Lücken oder alle anderen Lücken zwischen benachbarten Gebersegmenten des Geberelements. Anhand der Fehlstelle kann eine der Drehstellungen als Referenzlage oder Referenzstellung erfasst werden, von der ausgehend die anderen Drehstellungen vorteilhaft erfasst beziehungsweise ermittelt werden können, insbesondere derart, dass das Klauenschaltelement beispielsweise nur in solchen Drehstellungen eingespurt wird, in welchen es nicht zu einer Zahn-auf-Zahn-Stellung kommt.

Weiterhin ist vorzugsweise vorgesehen, dass zwischen zwei Fangzähnen jeweils ein Sperrzahn angeordnet ist.

Weiterhin kann vorzugsweise vorgesehen sein, dass das Klauenschaltelement als eine Klauenbremse ausgeführt ist, wobei der Sensor mit dem fest mit dem Gehäuse des Getriebes verbundenen, anderen Schaltteil verbunden ist, und das Geberelement fest mit dem einen, beweglichen Schaltteil verbunden ist. Dies ist insofern vorteilhaft, als bei gehäusefestem Schaltteil der Einspurvorgang besonders genau regelbar ist, da dann der Sensor die Drehzahl Null hat, mithin sich nicht um die Drehachse relativ zu dem Gehäuse dreht.

In weiterer Ausgestaltung der Erfindung ist es denkbar, dass das Klauenschaltelement als eine Klauenkupplung ausgeführt ist, wobei beispielsweise das andere Schaltteil abtriebsmäßig beziehungsweise drehfest mit Fahrzeugrädern oder mit wenigstens oder genau einem Fahrzeugrad des Kraftfahrzeugs verbunden ist. Dadurch kann eine Drehzahl des anderen Schaltteils ermittelt werden und somit bekannt sein, wobei die Drehzahl des anderen Schaltteils aus einer Geschwindigkeit des Kraftfahrzeugs ermittelt werden kann, welches mit der Geschwindigkeit beispielsweise entlang eines Bodens gefahren wird.

In weiterer Ausgestaltung ist es denkbar, dass die elektronische Recheneinrichtung eine Routine für eine Pulszuordnung nach einem Start des Kraftfahrzeugs bei geöffnetem Klauenschaltelement für eine Zuordnung von Winkellagen beziehungsweise Drehstellungen zu den Pulsen aufweist beziehungsweise durchführt.

In weiterer Ausgestaltung der Erfindung ist es denkbar, dass die Steuereinrichtung eine Einlernroutine, insbesondere für eine Durchführung im Bandendtest nach und/oder in der Fahrzeugproduktion (EOL-Test (End-of-Line-Test)) oder nach Getriebetausch im Betrieb des Kraftfahrzeugs aufweist, welche bei eingelegtem Klauenschaltelement (Schaltelement) für eine Zuordnung für jeden Puls dient, ob ein Einspuren erfolgen kann oder nicht.

In weiterer Ausgestaltung ist es insbesondere alternativ zur Einlernroutine vorgesehen, dass das Geberrad eine Markierung, Kerbe oder dergleichen aufweist, sodass die Winkellage des Fehlpulses des Geberrads gegenüber dem Sensor in jedem Seriengetriebe denselben fest vorgegebenen Wert hat. Wenn das Geberrad zum Beispiel eine Markierung aufweist und es eine Vorgabe gibt, dass das Geberrad immer in derselben Winkelposition zu verbauen ist, kann die Einlernroutine entfallen. Insbesondere ist es denkbar, dass in jedem neu verbauten Getriebe vor der Einlernroutine die Routine für die Pulszuordnung durchzuführen ist, was auch als Lernen oder Einlernen bezeichnet wird.

Die Fehlstelle wird auch als Fehlpuls bezeichnet, wobei es denkbar ist, dass genau eine oder mehrere Fehlstellen beziehungsweise Fehlpulse vorgesehen sind. Die gegenüber den anderen Geberlücken größere beziehungsweise breitere Geberlücke an der Fehlstelle führt dazu, dass zwei benachbarte Pulse des Signals einen größeren Abstand zueinander aufweisen als die übrigen, benachbarten Pulse, sodass die Geberlücke beziehungsweise der Fehlpuls erkannt werden kann. Alle auf den Fehlpuls folgenden Pulse können mit einem Index versehen werden, sodass eine jeweilige Winkelposition beziehungsweise die jeweilige Drehstellung des beispielsweise mit einer Welle drehfest verbundenen, einen Schaltteils ermittelt werden kann. Die Anzahl der Pulse, die beispielsweise durch magnetisierte Polräder oder durch Zähne erzeugt werden, ist vorzugsweise erheblich höher als die Anzahl der Klauenzähne, mindestens um den Faktor vier. Durch gezielten Verbau und/oder eine Einlernroutine wird den Indizes der Pulse beziehungsweise den Indizes der Bereiche zwischen zwei Pulsen zugeordnet, ob dieser eine Lücke oder einer Zahn-auf-Zahn-Stellung entspricht. Mithilfe dieser Information und mithilfe eines möglichst genauen Drehzahlgebers kann zum Einlegen beziehungsweise Einspuren der Klaue diese auf der Lücken-Position gehalten werden, sodass die Zahn-auf-Zahn-Stellung vermieden wird.

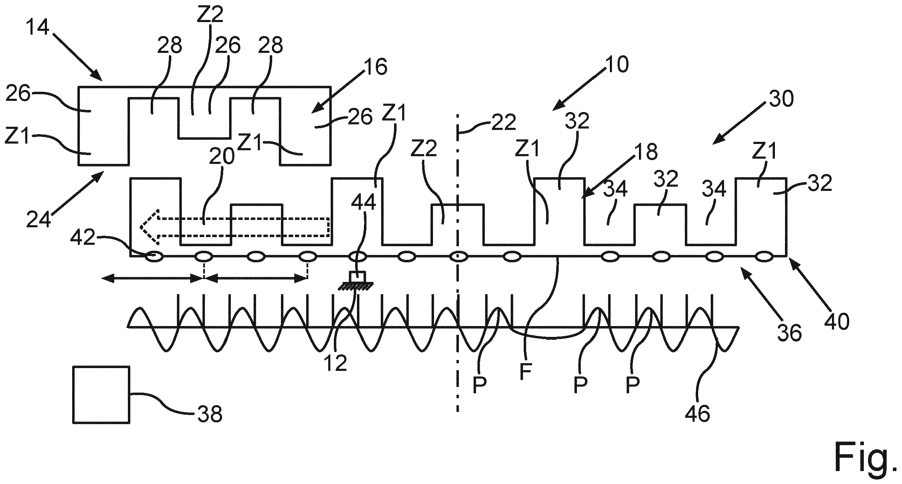

Die Zeichnung zeigt in der einzigen Fig. ausschnittsweise eine schematische Darstellung einer Ausführungsform einer Schaltungseinrichtung für ein Getriebe eines Kraftfahrzeugs gemäß der vorliegenden Erfindung.

Die einzige Fig. zeigt ausschnittsweise in einer schematischen Darstellung eine Schaltungseinrichtung 10 für ein Getriebe eines Kraftfahrzeugs, insbesondere eines Kraftwagens. Das Getriebe weist ein in der Fig. besonders schematisch dargestelltes Gehäuse 12 auf. Die Schaltungseinrichtung 10 umfasst wenigstens ein unsynchronisiertes Klauenschaltelement 14, welches auch einfach als Schaltelement oder Klaue bezeichnet wird. Beispielsweise umfasst das Kraftfahrzeug eine elektrische Maschine, mittels welcher das Kraftfahrzeug, insbesondere rein, elektrisch angetrieben werden kann, insbesondere derart, dass wenigstens oder genau zwei Fahrzeugräder des Kraftfahrzeugs mittels der elektrischen Maschine angetrieben werden können. Die elektrische Maschine weist einen Stator und einen relativ zu dem Stator drehbaren Rotor auf, über welchen das Kraftfahrzeug angetrieben werden kann. Das Klauenschaltelement 14 weist ein erstes Schaltteil 16 und ein zweites Schaltteil 18 auf. Wie in der Fig. durch einen gestrichelten Pfeil 20 veranschaulicht ist, ist das Schaltteil 18 um eine Drehachse 22 relativ zu dem Schaltteil 16 und relativ zu dem Gehäuse 12 drehbar. Dabei ist insbesondere denkbar, dass das Schaltteil 16 drehfest an dem Gehäuse 12 festgelegt und somit nicht um die Drehachse 22 relativ zu dem Gehäuse 12 drehbar ist. Insbesondere ist es denkbar, dass das Schaltteil 18 drehfest mit dem Rotor der elektrischen Maschine verbunden ist.

Das Schaltteil 16 weist eine erste Schaltverzahnung 24 mit ersten Zähnen 26 und ersten, zwischen den Zähnen 26 angeordneten Zahnlücken 28 auf. Das Schaltteil 18 weist eine zweite Schaltverzahnung 30 mit zweiten Zähnen 32 und zweiten, zwischen den Zähnen 32 angeordneten Zahnlücken 34 auf. Es ist erkennbar, dass die jeweiligen Zähne 26 und 32 jeweilige, parallel zur Drehachse 22 verlaufende Längen aufweisen. Dabei ist die Länge von in der Fig. mit Z1 bezeichneten Zähnen größer als die Länge von in der Fig. mit Z2 bezeichneten Zähnen, wobei der jeweilige Zahn Z1 auch als Fangzahn und der jeweilige Zahn Z2 auch als Sperrzahn bezeichnet werden. Beispielsweise sind das Klauenschaltelement 14 und die Schaltverzahnungen 24 und 30 wie in der DE 10 2012 043 592 A1 beschrieben, ausgebildet.

Aus der Fig. ist erkennbar, dass die Schaltverzahnung 24 der Schaltverzahnung 30 axial, das heißt entlang der Drehachse 22 zugewandt ist, und die Schaltverzahnung 30 ist der Schaltverzahnung 24 axial zugewandt. Die Schaltteile 16 und 18 sind entlang der Drehachse 22 relativ zueinander zwischen wenigstens einer Koppelstellung und wenigstens einer in der Fig. gezeigten Entkoppelstellung verschiebbar. In der Koppelstellung greifen die Schaltverzahnungen 24 und 30 ineinander, wodurch die Schaltteile 16 und 18 formschlüssig drehfest miteinander verbunden sind. In der Entkoppelstellung sind die Schaltverzahnungen 24 und 30 voneinander entkoppelt. Dies bedeutet, dass die Schaltverzahnungen 24 und 30 in der Entkoppelstellung nicht ineinandergreifen, sodass in der Entkoppelstellung die Schaltteile 16 und 18 um die Drehachse 22 relativ zueinander drehbar sind. Eine Bewegung der Schaltteile 16 und 18 aus der Entkoppelstellung in die Koppelstellung wird auch als Einspuren oder Einspurvorgang oder Einlegen des Klauenschaltelements 14 bezeichnet.

Um nun das Klauenschaltelement 14 besonders vorteilhaft einspuren zu können, umfasst die Schaltungseinrichtung 10 eine Erfassungseinrichtung 36, mittels welcher Drehstellungen, in die das Schaltteil 18 um die Drehachse 22 relativ zu dem Schaltteil 16 und relativ zu dem Gehäuse 12 drehbar ist, erfassbar sind beziehungsweise erfasst werden. Außerdem ist eine in der Fig. besonders schematisch dargestellte, elektronische Recheneinrichtung 38 vorgesehen, mittels welcher die Schaltteile 16 und 18 in Abhängigkeit von den erfassten Drehstellungen aus der Entkoppelstellung in die Koppelstellung bewegbar sind.

Die Erfassungseinrichtung 36 weist ein in der Fig. besonders schematisch dargestelltes und als Geberrad ausgebildetes Geberelement 40 auf. Das Geberelement 40 und somit die Polpaare 42 (je Zahn 32 und je Zahnlücke 34) sind drehfest mit dem Schaltteil 18 verbunden. Die Erfassungseinrichtung 36 umfasst außerdem ein einfach auch als Sensor bezeichnetes Sensorelement 44, welches drehfest mit dem Gehäuse 12 und/oder mit dem Schaltteil 16 verbunden ist. Die Polpaare 42 sind Gebersegmente des Geberelements 40 und können mittels des Sensorelements 44 erfasst werden. Das Sensorelement 44 stellt ein beispielsweise als Rohsignal ausgebildetes, insbesondere elektrisches, Signal 46 bereit, welches je erfasstem Polpaar 42, insbesondere genau, einen Puls P aufweist. Dabei weist das Geberelement 40 eine auch als Fehllücke bezeichnete Fehlstelle F auf, an welcher eine in um die Drehachse 22 verlaufender Umfangsrichtung des Geberelements 40 verlaufende erste Breite einer ersten Lücke zwischen zwei benachbarten Polpaaren 42 größer ist als in Umfangsrichtung des Geberelements verlaufende zweite Breiten von zweiten Lücken zwischen benachbarten Polpaaren 42. In dem Signal 46 wird die Fehlstelle F dadurch charakterisiert, dass ein erster Abstand zwischen zwei benachbarten Pulsen P des Signals 46 größer ist als zweite Abstände zwischen anderen Pulsen P des Signals 46. Die Fehlstelle F charakterisiert somit eine der Drehstellungen, sodass diese eine Drehstellung als eine Referenzstellung oder Referenzlage verwendet werden kann. Die Referenzlage ist somit beispielsweise bekannt und somit eine bekannte Lage des Schaltteils 18 relativ zu dem Schaltteil 16. Ausgehend von der Referenzlage können diejenigen Drehstellungen ermittelt beziehungsweise identifiziert werden, in denen es beim Einspuren der Klaue nicht zu Zahn-auf-Zahn-Stellungen kommt. Somit kann das Klauenschaltelement 14 besonders vorteilhaft eingespurt werden.

### Bezugszeichenliste

- 10: Schaltungseinrichtung
- 12: Gehäuse
- 14: Schaltelement
- 16: Schaltteil
- 18: Schaltteil
- 20: Pfeil
- 22: Drehachse
- 24: Schaltverzahnung
- 26: Zahn
- 28: Zahnlücke
- 30: Schaltverzahnung
- 32: Zahn
- 34: Zahnlücke
- 36: Erfassungseinrichtung
- 38: elektronische Recheneinrichtung
- 40: Geberelement
- 42: Polpaar
- 44: Sensorelement
- 46: Signal
- F: Fehlstelle
- P: Puls
- Z1: Zahn
- Z2: Zahn

## Patentansprüche

1. Schaltungseinrichtung (10) für ein Getriebe eines Kraftfahrzeugs, mit wenigstens einem unsynchronisierten Klauenschaltelement (14), welches zwei um eine Drehachse (22) relativ zueinander drehbare Schaltteile (16, 18) umfasst, die jeweils eine Schaltverzahnung (24, 30) aufweisen und entlang der Drehachse (22) relativ zueinander zwischen wenigstens einer Koppelstellung, in welcher die Schaltverzahnungen (24, 30) ineinander eingreifen, wodurch die Schaltteile (16, 18) drehfest miteinander verbunden sind, und wenigstens einer Entkoppelstellung verschiebbar sind, in welcher die Schaltverzahnungen (24, 26) voneinander entkoppelt sind, wodurch die Schaltteile (16, 18) um die Drehachse (22) relativ zueinander drehbar sind, wobei die Schaltungseinrichtung aufweist:
- eine Erfassungseinrichtung (36), mittels welcher Drehstellungen, in welche zumindest eines der Schaltteile (16, 18) um die Drehachse (22) relativ zu dem anderen Schaltteil (16) drehbar ist, erfassbar sind, und
- eine elektronische Recheneinrichtung (38), welche dazu ausgebildet ist, die Schaltteile (16, 18) in Abhängigkeit von den erfassten Drehstellungen aus der Entkoppelstellung in die Koppelstellung zu bewegen,
wobei die Erfassungseinrichtung (36) wenigstens ein Sensorelement (44) und wenigstens ein mit dem einen Schaltteil (18) drehfest verbundenes und dadurch mit dem einen Schaltteil (18) um die Drehachse (22) relativ zu dem Sensorelement (44) mitdrehbares Geberelement (40) umfasst, welches Gebersegmente (42) aufweist, die mittels des Sensorelements (44) erfassbar sind, sodass anhand des Erfassens der Gebersegmente (42) die Drehstellungen des einen Schaltteils (18) erfassbar sind,
**dadurch gekennzeichnet, dass**
eine Anzahl der Gebersegmente (42) mindestens der Summe aus einer Anzahl von Zähnen (32) der Schaltverzahnung (30) des einen Schaltteils (18) und einer Anzahl von Zahnlücken (34) der Schaltverzahnung (30) des einen Schaltteils (18) entspricht, wobei
das Geberelement (40) eine Fehlstelle (F) aufweist, an welcher eine in um die Drehachse (22) verlaufender Umfangsrichtung des Geberelements (40) verlaufende erste Breite einer ersten Lücke zwischen zwei benachbarten Gebersegmenten (42) des Geberelements (40) größer ist als in Umfangsrichtung des Geberelements (40) verlaufende zweite Breiten von zweiten Lücken zwischen benachbarten Gebersegmenten (42) des Geberelements (40).

2. Schaltungseinrichtung (10) nach Anspruch 1,
**dadurch gekennzeichnet, dass**
die Anzahl der Gebersegmente (42) mindestens doppelt so groß ist wie die Summe.

## Claims

1. Shifting device (10) for a transmission of a motor vehicle, having at least one unsynchronized claw shifting element (14) comprising two shifting parts (16, 18) which can be rotated relative to one another about an axis of rotation (22) and each have shifting teeth (24, 30) and are displaced relative to one another along the axis of rotation (22) between at least one coupling position, in which the shifting teeth (24, 30) engage with one another, as a result of which the shifting parts (16, 18) are connected to one another for conjoint rotation, and at least one decoupling position, in which the shifting teeth (24, 26) are decoupled from one another, as a result of which the shifting parts (16, 18) can be rotated relative to one another about the axis of rotation (22), wherein the shifting device has:
- a detection device (36) by means of which rotational positions, in which at least one of the shifting parts (16, 18) can be rotated about the axis of rotation (22) relative to the other shifting part (16), can be detected, and
- an electronic computing device (38) which is designed to move the shifting parts (16, 18) from the decoupling position to the coupling position depending on the detected rotational positions,
wherein the detection device (36) comprises at least one sensor element (44) and at least one transmitter element (40) which is connected for conjoint rotation with one shifting part (18) and can thereby rotate with this one shifting part (18) about the axis of rotation (22) relative to the sensor element (44) and which has transmitter segments (42) which can be detected by means of the sensor element (44), so that the rotational positions of this one shifting part (18) can be detected by detecting the transmitter segments (42), **characterized in that**
a number of the transmitter segments (42) corresponds at least to the sum of a number of teeth (32) of the shifting teeth (30) of this one shifting part (18) and a number of gaps (34) in the teeth of the shifting teeth (30) of this one shifting part (18), wherein
the transmitter element (40) has a defect (F) at which a first width of a first gap between two adjacent transmitter segments (42) of the transmitter element (40) extending in the circumferential direction of the transmitter element (40) which extends about the axis of rotation (22) is greater than second widths of second gaps between adjacent transmitter segments (42) of the transmitter element (40) extending in the circumferential direction of the transmitter element (40).

2. Shifting device (10) according to claim 1,
**characterized in that**
the number of transmitter segments (42) is at least twice as large as the sum.

## Revendications

1. Dispositif de commutation (10) pour une boîte de vitesses d'un véhicule automobile, comportant au moins un élément de commutation à griffes (14) non synchronisé, qui comprend deux pièces de commutation (16, 18) pouvant tourner l'une par rapport à l'autre autour d'un axe de rotation (22), qui présentent respectivement une denture de commutation (24, 30) et qui peuvent être déplacées l'une par rapport à l'autre le long de l'axe de rotation (22) entre au moins une position d'accouplement, dans laquelle les dentures de commutation (24, 30) s'engrènent l'une dans l'autre, moyennant quoi les pièces de commutation (16, 18) sont reliées entre elles de manière solidaire en rotation, et au moins une position de désaccouplement dans laquelle les dentures de commutation (24, 26) sont désaccouplées l'une de l'autre, moyennant quoi les pièces de commutation (16, 18) peuvent tourner l'une par rapport à l'autre autour de l'axe de rotation (22), dans lequel le dispositif de commutation présente :
- un dispositif de détection (36), à l'aide duquel des positions de rotation, dans lesquelles au moins l'une des pièces de commutation (16, 18) peut être entraînée en rotation autour de l'axe de rotation (22) par rapport à l'autre pièce de commutation (16), peuvent être détectées, et
- un dispositif de calcul électronique (38) qui est conçu pour déplacer les pièces de commutation (16, 18) de la position de désaccouplement à la position d'accouplement en fonction des positions de rotation détectées,
dans lequel le dispositif de détection (36) comprend au moins un élément capteur (44) et au moins un élément transmetteur (40) relié solidairement en rotation à l'une des pièces de commutation (18) et pouvant ainsi tourner avec l'une des pièces de commutation (18) autour de l'axe de rotation (22) par rapport à l'élément capteur (44), lequel élément transmetteur présente des segments transmetteurs (42) qui peuvent être détectés à l'aide de l'élément capteur (44), de sorte que les positions de rotation de l'une des pièces de commutation (18) peuvent être détectées à l'aide de la détection des segments transmetteurs (42), **caractérisé en ce**
**qu'**un nombre de segments transmetteurs (42) correspond au moins à la somme d'un nombre de dents (32) de la denture de commutation (30) de l'une des pièces de commutation (18) et d'un nombre d'entredents (34) de la denture de commutation (30) de l'une des pièces de commutation (18), dans lequel
l'élément transmetteur (40) présente un défaut (F) au niveau duquel une première largeur, s'étendant dans la direction périphérique de l'élément transmetteur (40) autour de l'axe de rotation (22), d'un premier espace entre deux segments transmetteurs (42) voisins de l'élément transmetteur (40) est supérieure à des secondes largeurs, s'étendant dans la direction périphérique de l'élément transmetteur (40), de seconds espaces entre des segments transmetteurs (42) voisins de l'élément transmetteur (40).

2. Dispositif de commutation (10) selon la revendication 1,
**caractérisé en ce que**
le nombre de segments transmetteurs (42) est au moins deux fois supérieur à la somme.
